# EUROPÄISCHE PATENTSCHRIFT

(11) **EP 2 226 208 B1**
(45) Veröffentlichungstag und Bekanntmachung des Hinweises auf die Patenterteilung: **10.10.2012**
(21) Anmeldenummer: 10002023.9
(22) Anmeldetag: 26.02.2010
(51) Int. Cl.: B60J 5/06

(54) **Schiebetüreinrichtung für ein Kraftfahrzeug**
Sliding door device for a motor vehicle
Dispositif de porte coulissante pour véhicule automobile

(30) Priorität: 03.03.2009 DE 102009011545
(43) Veröffentlichungstag der Anmeldung: 08.09.2010
(73) Patentinhaber: Bayerische Motoren Werke, 80809 München (DE)
(72) Erfinder: Köstler, Ulrich, 85241 Hebertshausen (DE); Schitter, Claus, 81379 München (DE)

(56) Entgegenhaltungen:
- DE-A1- 10 130 313
- FR-A1- 2 910 385
- US-A1- 2005 062 313

## Beschreibung

Die Erfindung betrifft eine Schiebetüreinrichtung für ein Kraftfahrzeug, mit den im Oberbegriff des Patentanspruches 1 angegebenen Merkmalen.

Eine derartige Schiebetüreinrichtung weist in der DE 10 2004 016 091 A1 an der Fahrzeugkarosserie eine jeweils seitlich obere und untere Führungsschiene auf. Die untere Führungsschiene ist über zwei ein Viergelenk bildende Schwenkhebel seitlich verstellbar und stützt längsverstellbar ein Schiebeteil ab, das mit einer Schiebetür fest verbunden ist. In der oberen Führungsschiene ist ein Pendelhebel verschiebbar, der an der Schiebetür angelenkt ist. Beim Öffnen der Schiebetür wird die Schiebetür weit aus der unteren Führungsschiene heraus verstellt, wodurch die Schiebetür zunehmend weniger gestützt ist. In der Offenlage der Schiebetür können Seitenkräfte und/oder Vertikalkräfte, die beispielsweise durch eine Person, eventuell ein Kind, an der Schiebetür bewirkt werden, hebelübersetzte Kräfte und Momente an den Führungsteilen und an den Schwenkhebeln bewirken, die zu einer Beschädigung dieser Bauteile führen können. Auch die in der Offenlage an der Schiebetür wirkende Schwerkraft belastet die Führungsteile und Schwenkhebel erheblich und kann eventuell einen Schiefstand der geöffneten Schiebetür bewirken. In der Offenlage der Schiebetür ist die Türöffnung lediglich größtenteils derart frei gegeben, dass eine einzelne Person durch den geöffneten Bereich der Türöffnung hindurch in das Kraftfahrzeug einsteigen oder aus dem Kraftfahrzeug aussteigen kann.

Die Patentanmeldung US 2005/062313 A1 zeigt eine ähnliche Schiebetüreinrichtung.

Der Erfindung liegt die Aufgabe zu Grunde, eine Schiebetüreinrichtung für ein Kraftfahrzeug mit den Merkmalen im Oberbegriff des Patentanspruches 1 anzugeben, die mit einfachen Mitteln insbesondere in allen Offenlagen stabiler abgestützt ist und eine von der Schiebetüreinrichtung verschließbare größere Türöffnung vollständig oder weitgehend frei geben kann.

Diese Aufgabe ist durch die Merkmale im Patentanspruch 1 gelöst. Vorteilhafte Ausgestaltungen der Erfindung sind den Unteransprüchen entnehmbar.

Die erfindungsgemäße Schiebetüreinrichtung für ein Kraftfahrzeug weist seitlich an der Fahrzeugkarosserie neben einer oberen und seitlich unteren Führungsschiene, in der jeweils ein Schiebeteil längsverstellbar geführt ist, eine in Höhenrichtung mittlere, ortsfeste Führungsschiene auf, in der eine Verstellführungsschiene mit einer Führung längsverstellbar geführt ist. In der Führung ist ein Verschiebeteil zwischen Anschlägen längsverstellbar, das direkt oder über ein Zwischenelement mit der Schiebetür gelenkig verbunden ist. Das betreffende Schiebeteil ist direkt oder über ein Zwischenteil gelenkig mit der Schiebetür verbunden. Auf diese Weise bildet die in Höhenrichtung mittlere Führungsschiene zusammen mit der darin verschiebbaren Verstellführungsschiene ein teleskopisch längenveränderliches Führungselement, an dem sich die Schiebetür zusätzlich abstützen kann. Dies ist insbesondere bei solchen Fahrzeugen ein wesentlicher Vorteil, bei denen sich ein in Höhenrichtung mittlerer Bereich des Kraftfahrzeugs bis in einen Heckbereich des Kraftfahrzeugs erstreckt und die in Höhenrichtung mittlere Führungsschiene bis in den Heckbereich verläuft. In diesem Fall kann die Schiebetür vorzugsweise an drei Stützstellen jeweils über ein zugeordnetes Schiebeteil an der oberen und unteren Führungsschiene und über die Verstellführungsschiene an der mittleren Führungsschiene besonders stabil abgestützt werden. Sind beispielsweise die der oberen und untere Führungsschiene zugeordneten Stützstellen jeweils im vorderen Bereich der Schiebetür vorgesehen und die in der mittleren Führungsschiene längsverstellbaren Verstellführungsschiene zugeordnete Stützstelle im hinteren Bereich der Schiebetür vorgesehen, können die Führungsschienen jeweils eine geringe Länge aufweisen, die jeweils dem Verstellweg des betreffenden Schiebeteils entspricht. Gleichzeitig ist eine maximale Basis realisiert, über die sich die Schiebetür an den Stützstellen abstützen kann. Bei einer anfänglichen Öffnungsbewegung der Schiebetür kann die Verstellführungsschiene gegenüber der in Höhenrichtung mittleren Führungsschiene ortsfest bleiben, wenn die Verstellführungsschiene einen Führungsbereich aufweist, in dem sich das in Höhenrichtung mittlere Schiebeteil an der Verstellführungsschiene verschiebbar abstützen kann. Erst wenn dieses Schiebeteil an einem Anschlag an dem Verstellschiebeteil zur Anlage kommt, wird bei einer weiteren Rückverlagerung der Schiebetür im Zusammenwirken des Schiebeteils mit diesem zugeordneten Anschlag die Verstellführungsschiene vorzugsweise lediglich in einem erforderlichen Maß mit nach hinten und damit nicht unnötig weit verstellt. Umgekehrt kommt das in Höhenrichtung mittlere Schiebeteil beim Schließen der Schiebetür erst nach einem Verstellweg an einem anderen Anschlag an der Verstellführungsschiene zur Anlage und bewirkt erst nach einer weiteren Schließbewegung der Schiebetür durch ein Zusammenwirken des betreffenden Schiebeteils mit diesem Anschlag eine Mitnahme der Verstellführungsschiene nach vorne vorzugsweise lediglich in einem erforderlichen Maß. Bei einer besonders bevorzugten Ausgestaltung ist im vorderen Bereich der Schiebetür eine etwa vertikale Schwenkachse ausgebildet, an der ein hinterer Bereich einer Schwenktür schwenkbar abgestützt ist. Bei einem Kraftfahrzeug mit vorderen und dahinter befindlichen Sitzen ist bei geöffneter Schwenktür der Fahrgastraum zugänglich. Dabei kann vorgesehen sein, dass über die geöffnete Schwenktür ein Vordersitz zugänglich ist, wenn sich die Schiebetür in ihrer Schließlage befindet. Befindet sich dagegen die Schiebetür in einer hinteren Offenlage, ist über die geöffnete Schwenktür ein hinterer Sitz zugänglich. Ebenso kann ein Vordersitz zusätzlich oder erst dann zugänglich sein, wenn die Schiebetür nach hinten in eine Offenlage verstellt ist und sich die Schwenktür in ihrer Schließlage befindet.

Zwei Ausführungsbeispiele der Erfindung werden nachfolgend anhand einer Zeichnung näher erläutert.

Es zeigen
- Fig. 1: eine schräge Seitenansicht eines Kraftfahrzeugs von vorne bei ge- schlossenen Seitentüren,
- Fig. 2: eine Fig. 1 entsprechende Ansicht, in der die seitliche Schiebetür zu- sammen mit der an der Schiebetür schwenkbar befestigten Schwenktür in eine hintere Offenlage zurück verstellt sind, wodurch ein Vordersitz zugänglich ist,
- Fig. 3: eine Fig. 2 entsprechende Ansicht, in der die Schwenktür aus der Fig. 2 entsprechenden Schließlage nach außen geschwenkt und dadurch auch ein Rücksitz zugänglich ist,
- Fig. 4: ein vereinfachter Horizontalschnitt durch den hinteren linken Heckbe- reich des Kraftfahrzeugs und die in Höhenrichtung mittlere Führungs- schiene,
- Fig. 5: eine vereinfachte Draufsicht auf einen mit einem Zwischenteil verbunde- nen Rollenwagen in einer Ansicht, die der Schließlage der Schiebetür und der Schwenktür entspricht, wobei ein derartiger Rollenwagen in der oberen und unteren Führungsschiene und in der Verstellführungsschie- ne verstellbar angeordnet ist,
- Fig. 6: eine Fig. 5 entsprechende Ansicht, wobei sich der Rollenwagen in einem etwa in Fahrzeuglängsrichtung verlaufenden Abschnitt der betreffenden oberen oder unteren Führungsschiene oder in der Verstellführungs- schiene befindet,
- Fig. 7: eine an der Schwenktür vorgesehene Dämpfungs- und/oder Federungs- einrichtung, die bei geschlossener Schwenktür in die Führung der unte- ren Führungsschiene eingetreten ist,
- Fig. 8: die in Fig. 7 dargestellte Schwenktür mit Dämpfungs- und/oder Fede- rungseinrichtung, die an ihre Schließlage derart angenähert ist, dass sich die Dämpfungs- und/oder Federungseinrichtung vor einer Zugangs- öffnung in der unteren Führungsschiene befindet, die einen Eintritt der Dämpfungs- und/oder Federungseinrichtung in den Führungsbereich der unteren Führungsschiene ermöglicht,
- Fig. 9: eine verkleinerte symbolische Darstellung des Kraftfahrzeugs, in der die obere, untere und in Höhenrichtung mittlere Führungsschiene für die Schiebetür erkennbar sind und
- Fig. 10: ein zweites Ausführungsbeispiel mit einer in der Schließlage der Schie- betür in eine Offenlage schwenkbaren Schwenktür an der Schiebetür.

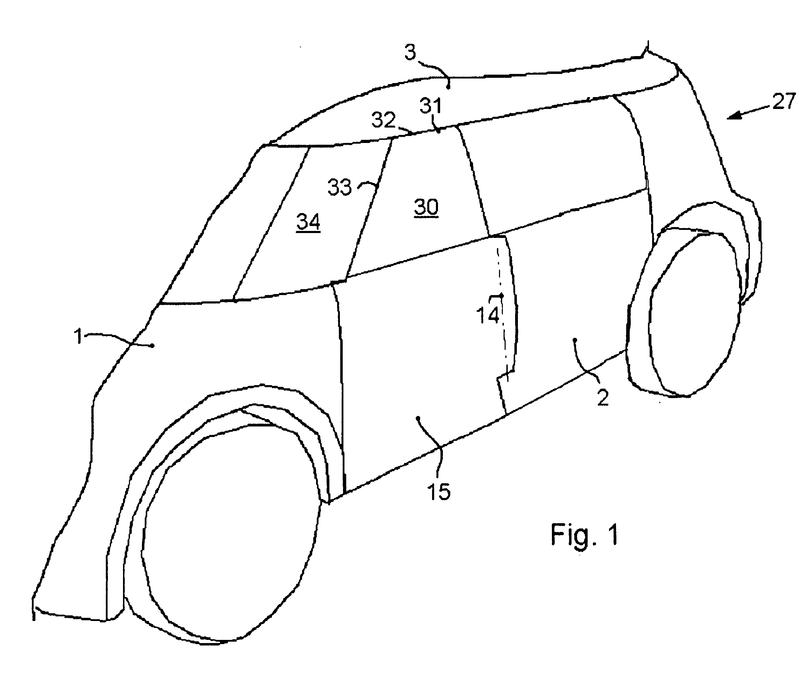

Das in Fig. 1 dargestellte Kraftfahrzeug 1 weist eine Schiebetüreinrichtung mit einer seitlichen Schiebetür 2 auf, die an der Fahrzeugkarosserie 3 über eine seitlich obere und untere Führungsschiene 4, 5 sowie eine Verstellführungsschiene 6 verschiebbar gestützt ist, wobei die Verstellführungsschiene 6 von einer in Höhenrichtung mittleren, an der Fahrzeugkarosserie 3 ortsfesten Führungsschiene 7 verschiebbar aufgenommen ist, die etwa bis in den Heckbereich des Kraftfahrzeugs 1 verläuft. Die obere und untere Führungsschiene 4, 5 sowie die Verstellführungsschiene 6 und die in Höhenrichtung mittlere, an der Fahrzeugkarosserie 3 ortsfeste Führungsschiene7 verlaufen jeweils etwa in Fahrzeuglängsrichtung.

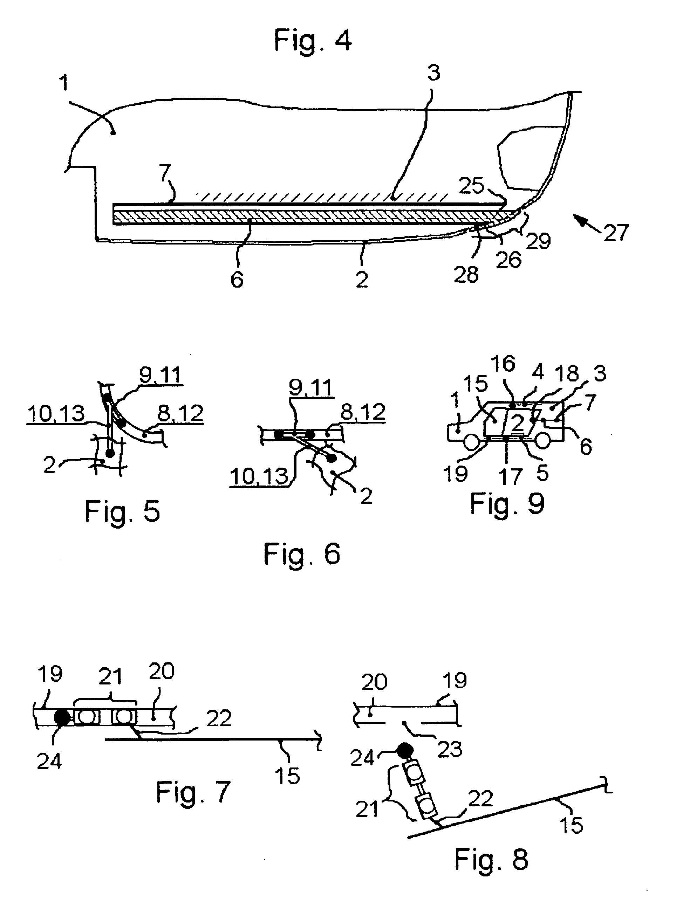

Jeweils in einer in den Figuren 5 und 6 symbolisch dargestellten Führung 8 der oberen und unteren Führungsschiene 4, 5 ist ein symbolisch dargestelltes Schiebeteil 9 längsverstellbar geführt, das jeweils über einen einerseits mit dem Schiebeteil 9 fest und andererseits mit der Schiebetür 2 gelenkig verbundenen Zwischenteil 10 die Schiebetür 2 stützt. Beispielsweise in hierzu vergleichbarer Weise ist in einer zugeordneten, ebenfalls in den Figuren 5 und 6 angegebenen Führung 12 der Verstellführungsschiene 6 ein Verstellschiebeteil 11 zwischen Anschlägen längsverstellbar angeordnet, das über einen einerseits mit dem Verstellschiebeteil 11 fest und andererseits mit der Schiebetür 2 gelenkig verbundenen Zwischenbauteil 13 die Schiebetür 2 stützt.

Die seitliche Schiebetür 2 ist über die beiden Schiebeteile 9 in der oberen und unteren Führungsschiene 4, 5 und das Verstellschiebeteil 11 in der Verstellführungsschiene 6 an insgesamt drei Gelenkstellen 16, 17, 18 geführt bzw. abgestützt, die in Fig. 9 erkennbar sind. Die beiden Gelenkstellen 16, 17 sind im vorderen oberen bzw. unteren Bereich und die Gelenkstelle 18 im hinteren, in Höhenrichtung mittleren Bereich jeweils der Schiebetür 2 vorgesehen, wodurch die Schiebetür auch gegenüber größeren Belastungen in jeder Lage stabil abgestützt ist.

Im vorderen Bereich der Schiebetür 2 ist eine etwa vertikale Schwenkachse 14 ausgebildet, an der ein hinterer Bereich einer Schwenktür 15 schwenkbar abgestützt ist. Die Schwenktür 15 ist in ihrer Schließlage, die in Fig. 1 dargestellt ist, in der sich auch die hintere Schiebetür 2 in ihrer Schließlage befindet, an ihrem vorderen Bereich über wenigstens ein Schloss gegenüber der Fahrzeugkarosserie 3 verriegelbar.

Im unteren Bereich der Fahrzeugkarosserie 3 ist eine Schwenktür-Führungsschiene 19 angeordnet, die bei dem Ausführungsbeispiel durch einen nach vorne verlängerten Bereich der unteren Führungsschiene 5 gebildet ist. In einer in den Figuren 7 und 8 erkennbaren Führung 20 der Schwenktür-Führungsschiene 19 ist ein Verschiebeteil 21 längsverstellbar geführt, das über ein Zwischenelement 22 mit einem vorderen unteren Bereich der Schwenktür 15 verbunden ist.

In der Schwenktür-Führungsschiene 19 ist eine in Fig. 8 erkennbare Ausnehmung 23 vorgesehen, durch die in einer vorgesehenen hinteren Verschiebelage der Schiebetür 2 das Verschiebeteil 21 aus der Schwenktür-Führungsschiene 19 austreten und dadurch der vordere Bereich der Schwenktür 15 seitlich nach außen in eine Offenlage schwenken kann.

An dem mit der Schwenktür 15 fest verbundenen Zwischenelement 22 ist eine in den Figuren nicht ohne weiteres erkennbare Dämpfungs- und/oder Federungseinrichtung vorgesehen, die ein elastisches Auslenken des mit dem Zwischenelement 22 über ein Federelement verbundenen Verschiebeteiles 21 zwischen nicht dargestellten Anschlägen ermöglicht, wie dies anhand der Figuren 7 und 8 erkennbar ist. Die Dämpfungs- und/oder Federungseinrichtung soll beim schwungvollen Schließen der geöffneten Schwenktür 15 ein hartes Anschlagen der Schwenktür 15 oder eines damit verbundenen Bauteils an der Schwenktür-Führungsschiene 19 und/oder an einem anderen Teil der Fahrzeugkarosserie 3 verhindern. Beim Schließen der geöffneten Schwenktür 15 tritt das Verschiebeteil 21 durch die Ausnehmung 23 gemäß Fig. 8 in die Führung 20 der Schwenktür-Führungsschiene 19 ein und verschwenkt gegen die Kraft eines nicht dargestellten Federelements zwischen dem Verschiebeteil 21 und dem Zwischenelement 22. Die Schwenktür 15 wird dabei in ihre in Fig. 7 dargestellte Schließlage geschwenkt. Ein Aufschlagen des Verschiebeteiles 21 bzw. eines davor angeordneten Aufprallelements 24 an der durch die Ausnehmung 23 in Fig. 8 in die Führung 20 der Schwenktür-Führungsschiene 19 eingetretenen Verschiebeteiles 21 an der Schwenktür-Führungsschiene 19 wird durch die Dämpfungs- und/oder Federungseinrichtung verhindert oder wesentlich abgeschwächt.

Bei dem Ausführungsbeispiel weisen das Schiebeteil 9, das Verschiebeteil 21 und das Verstellschiebeteil 11 jeweils einen Rollenwagen mit wenigstens zwei Drehachsen für jeweils wenigstens eine Rolle auf, die in der zugeordneten Führung 8, 12, 20 der oberen und unteren Führungsschiene 4, 5 und der Verstellführungsschiene 6 und der Schwenktür-Führungsschiene 19 gleiten und/oder abrollen kann.

Außerdem weisen bei dem Ausführungsbeispiel die obere und untere Führungsschiene 4, 5 und die Verstellführungsschiene 6 jeweils einen im Prinzip in den Figuren 5 und 6 erkennbaren Führungsverlauf auf, der im Wesentlichen wie in der Draufsicht gemäß Fig. 6 in Fahrzeuglängsrichtung verläuft und im vorderen Bereich gemäß der in Fig. 5 dargestellten Draufsicht einen Führungsbereich aufweist, der seitlich nach außen und eventuell nach hinten gerichtet ist und seitlich außen in den in Fahrzeuglängsrichtung verlaufenden Führungsbereich einmündet.

In Fig. 4 ist erkennbar, dass die in Höhenrichtung mittlere Führungsschiene 7 gegenüber der in der Führungsschiene 7 etwa in Fahrzeuglängsrichtung geführten Verstellführungsschiene 6, die in der Figur schraffiert dargestellt ist, seitlich innen angeordnet ist. In dem in Fig. 4 in einer Draufsicht dargestellten Höhenschnitt durch die in Höhenrichtung mittlere Führungsschiene 7 ist die gerundete linke hintere Kontur 27 des Kraftfahrzeugs 1 erkennbar. Zur Anpassung an diese Kontur 27 der Fahrzeugkarosserie 3 und um einen möglichst langen Führungsbereich zu realisieren, sind die hinteren Bereiche der mittleren Führungsschiene 7 und der Verstellführungsschiene 6 weit nach hinten in den Heckbereich des Kraftfahrzeugs 1 geführt und jeweils hinten seitlich nach außen und nach vorne abgeschrägt und/oder abgerundet ausgebildet.

Mit dem hinteren Bereich der Verstellführungsschiene 6 ist eine eventuell lackierte Abschlusswand 28 verbunden, die eine hintere Durchtrittsöffnung 29 in der Außenhaut der Fahrzeugkarosserie 3 verschließt, wenn die Schiebetür in ihre vordere Schließlage verstellt ist. Die Durchtrittsöffnung 29 ermöglicht einen Durchtritt eines hinteren Bereiches der Verstellführungsschiene 6 nach hinten, wenn beim Verstellen der geschlossenen Schiebetür 2 nach hinten zumindest nach einem Anfangsweg der Schiebetür 2 die Verstellführungsschiene 6 zusammen mit der Abschlusswand 28 nach hinten verstellt wird.

Das bei dem Ausführungsbeispiel von den der oberen und unteren Führungsschiene 4, 5 zugeordneten Rollenwagen 9 abstehende Zwischenteil 10 und das von dem der Verstellführungsschiene 6 zugeordneten Rollenwagen 11 abstehende Zwischenbauteil 13 sind jeweils zumindest bereichsweise ein gerader und/oder gekrümmter Hebelarm, die jeweils in einer vorgegebenen Richtung abstehen und an dem vorstehenden Endbereich mit der Schiebetür 2 an den in Fig. 9 erkennbaren Gelenkstellen 16, 17 und 18 gelenkig verbunden sind. Die Führungsverläufe jeweils der Führung 8 in der oberen und unteren Führungsschiene 4, 5 und der Führungsverlauf der Führung 12 in der Verstellführungsschiene 6 sind derart ausgebildet, dass jeweils die ideelle Verbindungsgerade durch die Endbereiche eines Hebelarmes 10 bzw. 13 bei geschlossener Schiebetür 2 seitlich nach außen und beim Verschieben der Schiebetür 2 in eine hintere Offenlage seitlich nach außen und nach hinten gerichtet sind. Auf diese Weise kann mit kürzeren Führungsschienen 4, 5 und kürzerer Verstellführungsschiene 6 ein größerer Längsverstellweg der Schiebetür 2 realisiert werden.

Die Schwenktür 15 weist eine feste oder höhenverstellbare Fensterscheibe 30 auf, die bei geschlossener Schiebetür 2 und geschlossener Schwenktür 15 und bei einer höhenverstellbaren Fensterscheibe 30 in Schließlage der Fensterscheibe 30 mit ihrem oberen rahmenlosen Randbereich 31 an einem Dachholm 32 und mit ihrem vorderen oberen rahmenlosen Randbereich 33 an einer A-Säule 34 des Kraftfahrzeugs 1 eventuell unter Zwischenschaltung einer Dichtung anliegt.

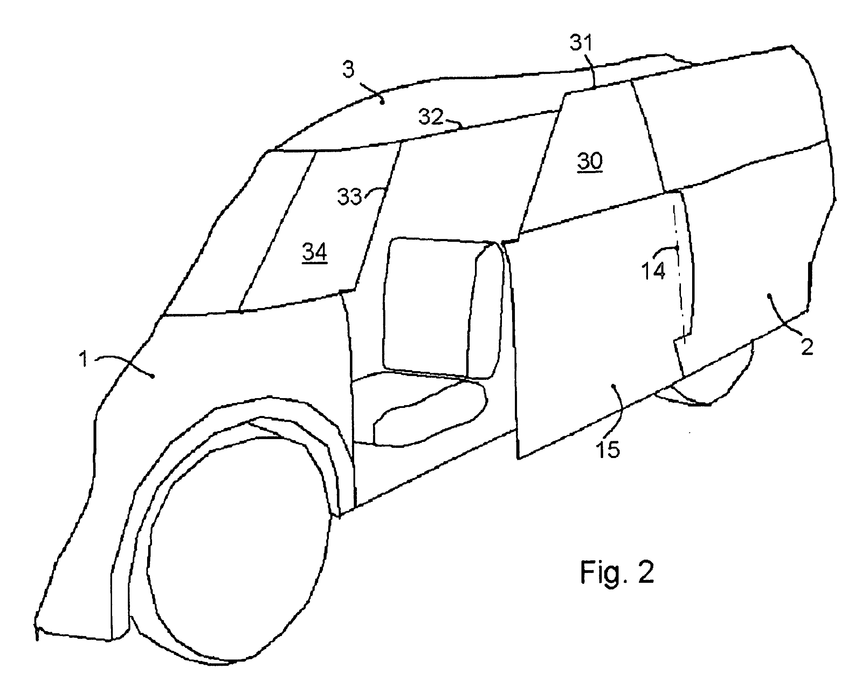

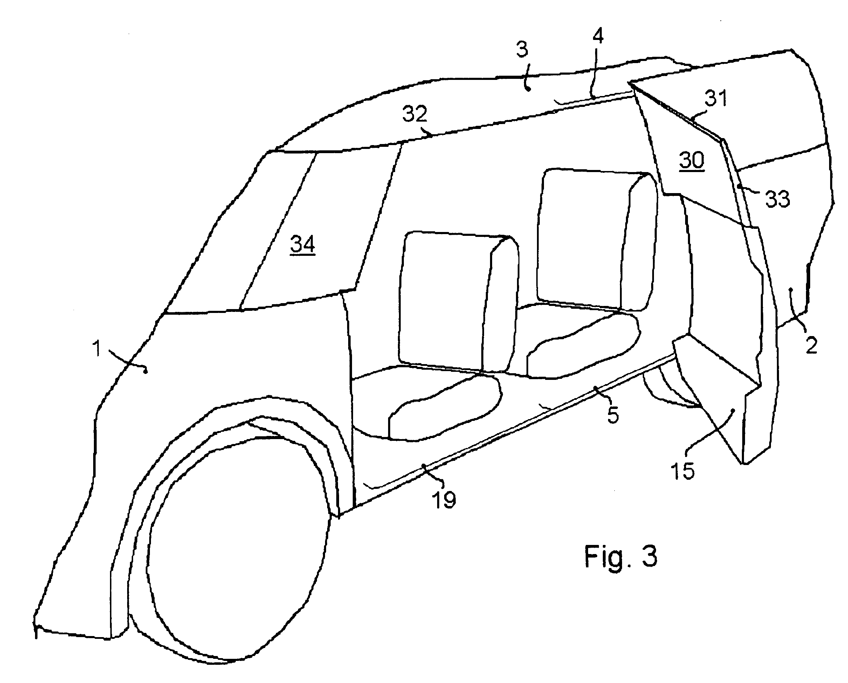

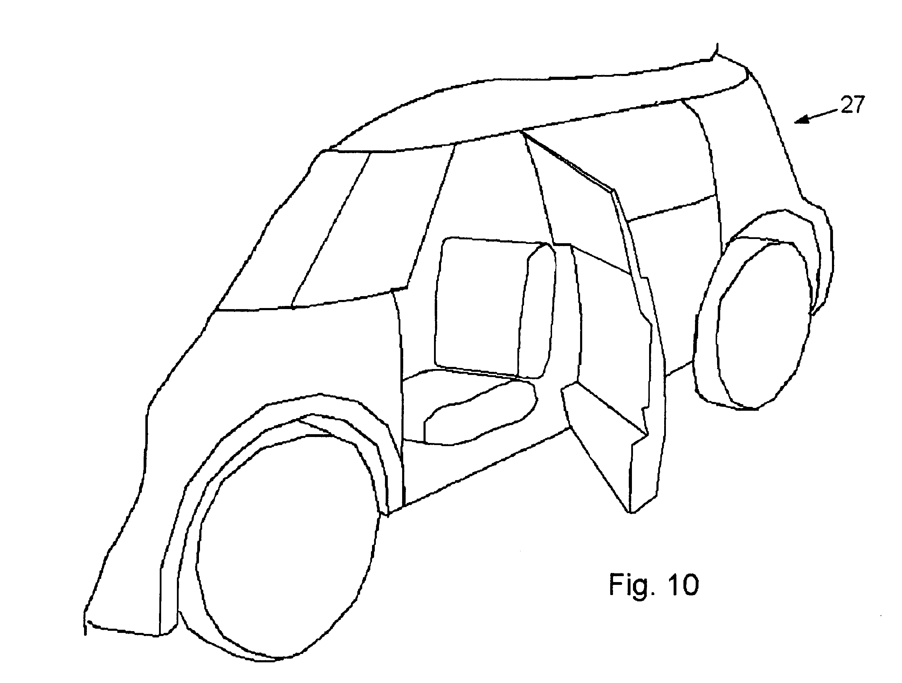

Ein zweites Ausführungsbeispiel der Erfindung ist in Fig. 10 dargestellt, das mit dem ersten Ausführungsbeispiel gemäß den Figuren 1 bis 9 weitgehend überein stimmt.

Zur Vermeidung einer wiederholten Beschreibung von zwischen den Ausführungsbeispielen gleichen oder vergleichbaren Bauteilen, sind diese mit einer gleichen Bezugszahl versehen. Bei dem zweiten Ausführungsbeispiel ist in der Schwenktür-Führungsschiene 19 eine in den Figuren nicht erkennbare seitliche Ausnehmung vorgesehen, die mit der seitlichen Ausnehmung 23 in Fig. 8 vergleichbar ist und ein seitliches Ausschwenken der Schwenktür in eine Offenlage bereits in der Schließlage der Schiebetür 2 ermöglicht. Beim seitlichen Verschwenken der Schwenktür 2 in der Schließlage der Schiebetür 2 tritt das Verschiebeteil 21 wie in den Figuren 7 und 8 dargestellt durch die vordere Ausnehmung in der Schwenktür-Führungsschiene 19 in die Führung 20 der Schwenktür-Führungsschiene ein bzw. aus der Führung 20 aus.

Die Erfindung kann auch von dem Ausführungsbeispiel abweichend ausgeführt werden. Die Verstellführungsschiene kann in einer von einem Fachmann vorgebbaren Weise von der in Höhenrichtung mittleren Führungsschiene etwa in Fahrzuglängsrichtung verstellbar geführt sein. Hierzu kann beispielsweise die Verstellführungsschiene im Querschnitt einen T-förmigen Kopfbereich aufweisen, der von der mittleren Führungsschiene teilweise umgriffen ist. Die Anschläge in der Verstellführungsschiene sind vorzugsweise an den Endbereichen der Führung in der Verstellführungsschiene vorgesehen, so dass die Verstellführungsschiene im Wesentlichen nur dann gegenüber der karosseriefesten mittleren Führungsschiene verstellt wird, wenn nach einem entsprechenden Längsverstellweg der Schiebetür beim Öffnen bzw. Schließen ein beliebiger Mitnehmer an dem betreffenden Anschlag zur Anlage kommt und bei einer weiteren Verstellbewegung der Schiebetür die Verstellführungsschiene mitnimmt. Die seitliche Schiebetür könnte auch über mehr als drei Gelenkstellen geführt bzw. abgestützt sein. Die Schwenktür-Führungsschiene könnte auch durch eine separate Führungsschiene gebildet sein. Die Dämpfungs- und/oder Federungseinrichtung kann beispielsweise an dem Verschiebeteil oder an dem Zwischenelement oder an der Schwenktür verstellbar oder ortsfest angeordnet sein und verhindert vorzugsweise beim schwungvollen Schließen der geöffneten Schwenktür ein hartes Anschlagen der Schwenktür oder eines damit verbundenen Bauteils an der Schwenktür-Führungsschiene und/oder an einem anderen Teil der Fahrzeugkarosserie. Das Schiebeteil und/oder das Verschiebeteil und/oder das Verstellschiebeteil können jeweils einzeln oder gemeinsam einen Rollenwagen mit wenigstens einer Drehachse aufweisen oder auf beliebige andere Weise beispielsweise durch ein Schiebeteil gebildet sein. Der jeweilige Führungsverlauf der Führungsschienen und/oder der Verstellführungsschiene und/oder der Schwenktür-Führungsschiene ist an sich beliebig vorgebbar.

## Patentansprüche

1. Schiebetüreinrichtung für ein Kraftfahrzeug, mit einer an der Fahrzeugkarosserie (3) seitlich oberen und unteren Führungsschiene (4,5), in der jeweils ein Schiebeteil (9) längsverstellbar geführt ist, das mit einer Schiebetür (2) verbunden ist, wobei das Schiebeteil (9) direkt oder über ein Zwischenteil (10) gelenkig mit der Schiebetür (2) verbunden ist und seitlich an der Fahrzeugkarosserie (3) eine in Höhenrichtung mittlere Führungsschiene (7) ortsfest angeordnet ist **dadurch gekennzeichnet, dass** in der mittleren Führungsschiene (7) eine Verstellführungsschiene (6) mit einer Führung längsverstellbar geführt ist, und in der Führung ein Verstellschiebeteil (11) zwischen Anschlägen längsverstellbar ist, das direkt oder über ein Zwischenbauteil (13) mit der Schiebetür (2) gelenkig verbunden ist.

2. Schiebetüreinrichtung nach Patentanspruch 1, **dadurch gekennzeichnet, dass** die seitliche Schiebetür (2) über die Schiebeteile (9) in der oberen und unteren Führungsschiene (4, 5) und das Verstellschiebeteil (11) in der Verstellführungsschiene (6) an insgesamt drei Gelenkstellen (16, 17, 18) geführt bzw. abgestützt ist.

3. Schiebetüreinrichtung nach Patentanspruch 1 oder 2, **dadurch gekennzeichnet, dass** im vorderen Bereich der Schiebetür (2) eine etwa vertikale Schwenkachse (14) ausgebildet ist, an der ein hinterer Bereich einer Schwenktür (15) schwenkbar abgestützt ist.

4. Schiebetüreinrichtung nach Patentanspruch 3, **dadurch gekennzeichnet, dass** im unteren Bereich der Fahrzeugkarosserie (3) eine Schwenktür-Führungsschiene (19) angeordnet ist, in der ein Verschiebeteil (21) längsverstellbar geführt ist, das direkt oder über ein Zwischenelement (22) mit einem vorderen unteren Bereich der Schwenktür (15) verbunden ist.

5. Schiebetüreinrichtung nach Patentanspruch 4, **dadurch gekennzeichnet, dass** die Schwenktür-Führungsschiene (19) durch einen nach vorne verlängerten Bereich der unteren Führungsschiene (5) gebildet ist.

6. Schiebetüreinrichtung nach einem der Patentansprüche 3 bis 5, **dadurch gekennzeichnet, dass** in der Schwenktür-Führungsschiene (19) wenigstens eine seitliche Ausnehmung (23) vorgesehen ist, durch die in einer vorgesehenen hinteren Verschiebelage der Schiebetür (2) und eventuell in den Schließlagen der Schiebetür (2) und der Schwenktür (15) das Verschiebeteil (21) aus der Führung (20) Schwenktür-Führungsschiene (19) austreten und dadurch der vordere Bereich der Schwenktür (15) seitlich nach außen in eine Offenlage schwenken kann.

7. Schiebetüreinrichtung nach einem der Patentansprüche 3 bis 6, **dadurch gekennzeichnet, dass** an dem Verschiebeteil (21) und/oder an dem Zwischenelement (22) und/oder an der Schwenktür eine Dämpfungs- und/oder Federungseinrichtung im Wesentlichen verstellbar oder ortsfest angeordnet ist, die beim schwungvollen Schließen der geöffneten Schwenktür (15) ein hartes Anschlagen der Schwenktür (15) oder eines damit verbundenen Bauteils (24) an der Schwenktür-Führungsschiene (19) und/oder an einem anderen Teil der Fahrzeugkarosserie verhindert.

8. Schiebetüreinrichtung nach einem der Patentansprüche 1 bis 7, **dadurch gekennzeichnet, dass** das Schiebeteil (9) und/oder das Verschiebeteil (21) und/oder das Verstellschiebeteil (11) einen Rollenwagen mit wenigstens einer Drehachse für jeweils wenigstens eine Rolle aufweist, die in der zugeordneten Führung (8, 12, 20) der Führungsschiene (4, 5) bzw. Verstellführungsschiene (6) bzw. Schwenktür-Führungsschiene (19) gleiten und/oder abrollen kann.

9. Schiebetüreinrichtung nach einem der Patentansprüche 1 bis 8, **dadurch gekennzeichnet, dass** zumindest eine Führungsschiene (4, 5) und/oder die Verstellführungsschiene (6) und/oder die Schwenktür-Führungsschiene (19) einen Führungsverlauf aufweist, der im Wesentlichen in Fahrzeuglängsrichtung verläuft oder zusätzlich im vorderen Bereich einen Führungsbereich aufweist, der in einer Draufsicht seitlich nach außen und eventuell nach hinten gerichtet ist und seitlich außen in den in Fahrzeuglängsrichtung verlaufenden Führungsbereich einmündet.

10. Schiebetüreinrichtung nach einem der Patentansprüche 1 bis 9, **dadurch gekennzeichnet, dass** die in Höhenrichtung mittlere Führungsschiene (7) gegenüber der in der Führungsschiene (7) etwa in Fahrzeuglängsrichtung geführten Verstellführungsschiene (6) seitlich innen angeordnet ist und zur Anpassung an die Kontur (27) der Fahrzeugkarosserie (3) im seitlichen Heckbereich und um einen möglichst langen Führungsbereich zu realisieren die hinteren Bereiche der mittleren Führungsschiene (7) und der Verstellführungsschiene (6) weit nach hinten in den Heckbereich des Kraftfahrzeugs (1) geführt und jeweils hinten seitlich nach außen und nach vorne abgeschrägt und/oder abgerundet ausgebildet sind.

11. Schiebetüreinrichtung nach einem der Patentansprüche 1 bis 10, **dadurch gekennzeichnet, dass** mit dem hinteren Bereich der Verstellführungsschiene (6) eine eventuell lackierte Abschlusswand (28) verbunden ist, die eine hintere Durchtrittsöffnung (29) in der Außenhaut der Fahrzeugkarosserie (3) verschließt, wenn die Schiebetür (2) in ihre vordere Schließlage verstellt ist, und die Durchtrittsöffnung (29) einen Durchtritt eines hinteren Bereiches (26) der Verstellführungsschiene (6) nach hinten ermöglicht, wenn beim Verstellen der geschlossenen Schiebetür (2) nach hinten zumindest nach einem Anfangsweg der Schiebetür (2) die Verstellführungsschiene (6) zusammen mit der Abschlusswand (28) nach hinten verstellt werden.

12. Schiebetüreinrichtung nach einem der Patentansprüche 9 bis 11, **dadurch gekennzeichnet, dass** von wenigstens einem Rollenwagen (9, 11) ein jeweils zumindest bereichsweise gerader und/oder gekrümmter Hebelarm (10, 13) in einer vorgegebenen Richtung absteht und an seinem vorstehenden Endbereich mit der Schiebetür (2) gelenkig verbunden ist und der Führungsverlauf derart ausgebildet ist, dass die ideelle Verbindungsgerade durch die Endbereiche des Hebelarmes (10, 13) jeweils im Wesentlichen bei geschlossener Schiebetür (2) seitlich nach außen und beim Verschieben der Schiebetür (2) in eine hintere Offenlage nach hinten und seitlich nach außen gerichtet ist.

13. Schiebetüreinrichtung nach einem der Patentansprüche 3 bis 12, **dadurch gekennzeichnet, dass** die Schwenktür (15) eine feste oder höhenverstellbare Fensterscheibe (30) aufweist, die bei geschlossener Schiebetür (2) und geschlossener Schwenktür (15) und bei einer höhenverstellbaren Fensterscheibe (30) in Schließlage der Fensterscheibe (30) mit ihrem oberen rahmenlosen Randbereich (31) an einem Dachholm (32) und mit ihrem vorderen oberen rahmenlosen Randbereich (33) an einer A-Säule (34) des Kraftfahrzeugs (1) eventuell unter Zwischenschaltung einer Dichtung anliegt.

## Claims

1. A sliding door device for a motor vehicle comprising a top side guide rail (4) and a bottom guide rail (5) on the vehicle body (3), a sliding part (9) being longitudinally guidable in each rail and connected to a sliding door (2), wherein the sliding part (9) is pivotably connected to the sliding door (2) directly or via an intermediate part (10) and a vertically central guide rail (7) is permanently mounted laterally on the body (3), **characterised in that** in the central guide rail (7) a guide rail (6) is longitudinally adjustable by a guide and an adjustable sliding part (11) longitudinally adjustable between stops in the guide is pivotably connected to the sliding door (2), directly or via an intermediate component (13).

2. A sliding door device according to claim 1, **characterised in that** the lateral sliding door (2) is guided or braced by the sliding parts (9) in the top and bottom guide rails (4, 5) and the adjustable sliding part (11) is guided or braced in the rail (6) at a total of three moving joints (16, 17, 18).

3. A sliding door device according to claim 1 or claim 2, **characterised in that** in the front region of the sliding door (2) an approximately vertical pivot (14) is pivotably braced against a rear region of a swing door (15).

4. A sliding door device according to claim 3, **characterised in that** a swing door guide rail (19) is disposed in the bottom region of the body (3) and a moving part (21) is longitudinally guided in it and is connected to a front bottom region of the swing door (15) directly or via an intermediate element (22).

5. A sliding door device according to claim 4, **characterised in that** the guide rail (19) is formed by a forwardly lengthened region of the bottom guide rail (5).

6. A sliding door device according to any of claims 3 to 5, **characterised in that** the rail (19) is formed with at least one lateral opening (23) through which, when the door (2) has been slid into the rear position provided and the doors (2) and (15) are in the closed position if required, the sliding part (21) can come out of the guide (20) in the rail (19) and consequently the front region of the swing door (15) can swing sideways and outwards into an open position.

7. A sliding door device according to any of claims 3 to 6, **characterised in that** a damping and/or suspension device is substantially adjustable or permanently mounted on the sliding part (21) and/or on the intermediate element (22) and/or on the swing door and prevents the swing door (15) or a component (24) connected thereto from banging against the rail (19) or another part of the vehicle body when the opened sliding door (15) is abruptly closed.

8. A sliding door device according to any of claims 1 to 7, **characterised in that** the sliding part (9) and/or the moving part (21) and/or the adjustable sliding part (11) has a bogie-wheel suspension with at least one pivot for at least one pulley each, adapted to slide and/or move in the associated guide (8, 12, 20) of the guide rail (4, 5) or of the adjustable guide rail (6) or the swing-door guide rail (19).

9. A sliding door device according to any of claims 1 to 8, **characterised in that** at least one guide rail (4, 5) and/or the adjustable guide rail (6) and/or the swing-door guide rail (19) has a shape which substantially extends in the longitudinal direction of the vehicle or additionally, in the front region, has a guide region which in plan view extends laterally outwards and also backwards if required and opens laterally outwardly into the guide range extending in the longitudinal direction of the vehicle.

10. A sliding door device according to any of claims 1 to 9, **characterised in that** the vertically middle guide rail (7) is disposed laterally inwards relative to the adjustable guide rail (6) guided in the rail (7) approximately in the longitudinal direction of the vehicle, and in order to adapt to the contour (27) of the vehicle body (3) in the lateral rear region and to obtain a guide region of maximum length, the rear regions of the middle guide rail (7) and of the adjustable guide rail (6) extend far backwards into the rear region of the vehicle (1) and are each bevelled and/or rounded forwardly and laterally and outwardly at the rear.

11. A sliding door device according to any of claims 1 to 10, **characterised in that** the rear region of the adjustable guide rail (6) is connected to a closure wall (28), painted if required, which closes a rear passage opening (29) in the skin of the vehicle body (3) when the guiding door (2) is moved into its front closed position, and the opening (29) provides a passage for a rear region (26) of the adjustable guide rail(6) backwards if, when the closed sliding door (2) is opened, the adjustable guide rail (6) and the closure wall (28) are moved backwards at least after initial travel of the sliding door (2).

12. A sliding door device according to any of claims 9 to 11, **characterised in that** a lever arm (10, 13), straight and/or curved at least in places extends in a set direction from at least one bogie-wheel suspension (9, 11) and its projecting end region is pivotably connected to the sliding door (2), and the guide is shaped so that the imaginary connecting line through the end regions of the lever arm (10, 13) substantially extends laterally outwards when the sliding door (2) is closed and backwards and laterally outwards when the sliding door (2) is moved into a rear open position.

13. A sliding door device according to any of claims 3 to 12, **characterised in that** the swing door (15) has a fixed or vertically adjustable window-pane (30) such that when the sliding door (2) and the swing door (15) are closed and when a vertically adjustable window pane (30) is in the closed position, the top frameless edge region (31) of the window pane (30) abuts a roof member (32) and its front top frameless edge region (33) abuts an A-column (34) of the vehicle (1), optionally with interposition of a seal.

## Revendications

1. Installation de porte coulissante de véhicule automobile comportant des rails de guidage supérieur et inférieur (4, 5) situés latéralement sur la carrosserie (3) et guidant chacun une pièce coulissante (9) mobile longitudinalement, cette pièce étant reliée à une porte coulissante (2),
* la pièce coulissante (9) reliée de manière articulée à la porte coulissante (2) soit directement soit par une pièce intermédiaire (10) et étant installée de manière fixe latéralement sur la carrosserie (3) dans un rail de guidage (7) à hauteur intermédiaire,
installation **caractérisée en ce qu'**
un rail de guidage de réglage (6) est guidé de manière réglable longitudinalement par un guide dans le rail de guidage intermédiaire (7) et le guide comporte une pièce coulissante (11) réglable longitudinalement entre des butées, et reliée de manière articulée directement à la porte coulissante (2) ou par une pièce intermédiaire (13).

2. Installation de porte coulissante selon la revendication 1,
**caractérisée en ce que**
la porte coulissante latérale (2) est guidée ou soutenue par en tout trois points d'articulation (16, 17, 18) par des pièces coulissantes (9) dans le rail de guidage supérieur et les rails de guidage supérieur et inférieur (4, 5) et la pièce coulissante (11) est guidée dans le rail de guidage de réglage (6).

3. Installation de porte coulissante selon la revendication 1 ou 2,
**caractérisée en ce que**
la région avant de la porte coulissante (2) comporte un axe de pivotement (14) sensiblement vertical sur lequel la zone arrière d'une porte pivotante (15) s'appuie de manière pivotante.

4. Installation de porte coulissante selon la revendication 3,
**caractérisée par**
un rail de guidage de porte pivotante (19) dans la région inférieure de la carrosserie (3) du véhicule, rail guidant de manière réglable longitudinalement une pièce coulissante (21) reliée directement à la zone avant inférieure de la porte pivotante (15) ou par un élément intermédiaire (22).

5. Installation de porte coulissante selon la revendication 4,
**caractérisée en ce que**
le rail de guidage de porte pivotante (19) est formé par une zone prolongée vers l'avant du rail de guidage inférieur (5).

6. Installation de porte coulissante selon l'une des revendications 3 à 5,
**caractérisée en ce que**
le rail de guidage de porte pivotante (19) comporte au moins une ouverture latérale (23) permettant à la pièce coulissante (21) de sortir du guide (20) du rail (19) dans la position de coulissement arrière prévu de la porte coulissante (2) et éventuellement dans les positions de fermeture de la porte coulissante (2) et de la porte pivotante (15) de sorte que la zone avant de la porte pivotante (15) peut pivoter latéralement vers l'extérieur dans une position d'ouverture.

7. Installation de porte coulissante selon l'une des revendications 3 à 6,
**caractérisée par**
une installation d'amortissement et/ou de suspension principalement réglable ou fixe sur la pièce coulissante (21) et/ou sur l'élément intermédiaire (22) et/ou la porte pivotante, cette installation d'amortissement ou de suspension évitant un choc dur de la porte pivotante (15) ou d'une pièce (24) reliée à celle-ci contre le rail de guidage de porte pivotante (19) et/ou une autre partie de la carrosserie du véhicule si la porte pivotante ouverte (15) est fermée par un mouvement violent.

8. Installation de porte coulissante selon l'une des revendications 1 à 7,
**caractérisée en ce que**
la pièce coulissante (9) et/ou la pièce coulissante (21) et/ou la pièce coulissante réglable (11) comporte(nt) un chariot à galets avec au moins un axe de rotation pour au moins un galet qui glisse et/ou roule, dans le guide associé (8, 12, 20) du rail de guidage (4, 5) ou du rail de guidage de réglage (6) ou du rail de guidage de la porte pivotante (19).

9. Installation de porte coulissante selon l'une des revendications 1 à 8,
**caractérisée en ce qu'**
au moins un rail de guidage (4, 5) et/ ou le rail de guidage de réglage (6) et/ou le rail de guidage de porte pivotante (19) ont une ligne de guidage principalement dans la direction longitudinale du véhicule ou en plus dans la région avant, une zone de guidage qui, en vue de dessus, est dirigée latéralement vers l'extérieur et éventuellement vers l'arrière et qui débouche latéralement vers l'extérieur dans une région de guidage dans la direction longitudinale du véhicule.

10. Installation de porte coulissante selon l'une des revendications 1 à 9,
**caractérisée en ce que**
le rail de guidage à hauteur intermédiaire (7) est installé latéralement à l'intérieur du rail de guidage de réglage (6) dans la direction longitudinale du véhicule et pour s'adapter au contour (27) de la carrosserie (3), dans la zone arrière latérale et pour réaliser une zone de guidage aussi longue que possible, la zone arrière du rail de guidage intermédiaire (7) et celle du rail de guidage de réglage (6) sont prolongées loin vers l'arrière dans la région arrière du véhicule (1) et sont chaque fois en biais et/ou arrondies vers l'arrière latéralement vers l'extérieur et vers l'avant.

11. Installation de porte coulissante selon l'une des revendications 1 à 10,
**caractérisée en ce qu'**
une paroi de terminaison éventuellement laquée (28) est reliée à la zone arrière du rail de guidage de réglage (6) pour fermer l'orifice de passage (29) arrière de la peau extérieure de la carrosserie (3) lorsque la porte coulissante (2) est déplacée dans sa position de fermeture avant et l'orifice de passage (29) permet un passage de la zone arrière (26) du rail de guidage de réglage (6) vers l'arrière si au déplacement de la porte coulissante (2) fermée, vers l'arrière, au moins après un certain trajet initial de la porte coulissante (2), le rail de guidage de réglage (6) se déplace vers l'arrière avec la cloison (28).

12. Installation de porte coulissante selon l'une des revendications 9 à 11,
**caractérisée en ce que**
partant d'au moins un chariot à galets (9, 11), au moins un bras de levier (10, 13) par zone rectiligne et/ou courbe, vient en saillie dans une direction prédéfinie et sa zone d'extrémité en saillie est reliée de manière articulée à la porte coulissante (2) et le tracé de guidage est réalisé pour que la droite de liaison passant par les zones d'extrémité du bras de levier (10, 13) soit dirigée principalement latéralement vers l'extérieur lorsque la porte coulissante (2) est fermée, et lors du coulissement de la porte coulissante (2) dans une position ouverte arrière, cette droite est dirigée vers l'arrière et latéralement vers l'extérieur.

13. Installation de porte coulissante selon l'une des revendications 3 à 12,
**caractérisée en ce que**
la porte pivotante (15) comporte une vitre (30) fixe ou relevable, et lorsque la porte coulissante (2) est fermée et que la porte pivotante (15) est fermée, la vitre (30) relevable, en position de fermeture vient avec sa zone de bord haut (31) sans cadre contre un longeron de toit (32) et par sa zone de bord supérieure avant (33), sans cadre, contre la colonne A (34) du véhicule (1) éventuellement avec interposition d'un joint.
